# EUROPÄISCHE PATENTSCHRIFT

(11) **EP 3 958 046 B1**
(45) Veröffentlichungstag und Bekanntmachung des Hinweises auf die Patenterteilung: **30.04.2025**
(21) Anmeldenummer: 20192151.7
(22) Anmeldetag: 21.08.2020
(51) Int. Cl.: G02C 7/10

(54) **SONNENSCHUTZVORRICHTUNG**
SUN PROTECTION DEVICE
DISPOSITIF DE PROTECTION SOLAIRE

(43) Veröffentlichungstag der Anmeldung: 23.02.2022
(73) Patentinhaber: Optrel Holding AG, 9630 Wattwil (CH)
(72) Erfinder: KOCH, Marco, 9613 Mühlrüti (CH); BLOECHLINGER, Daniel, 8735 St. Gallenkappel (CH); EXPOSITO, Martin, 8640 Rapperswil (CH)
(74) Vertreter: Daub, Thomas

(56) Entgegenhaltungen:
- US-A- 5 608 567
- US-A1- 2018 107 025
- US-A1- 2018 210 233

## Beschreibung

### Stand der Technik

Die Erfindung betrifft eine Sonnenschutzvorrichtung, insbesondere eine Sonnenbrille.

Aus der EP 3 223 067 ist bereits eine Sonnenbrille, mit zumindest einem optischen Sonnenschutzfilter, der zumindest eine Flüssigkristallzelle aufweist, bekannt.

Ferner ist aus der US 2018/107025 A1 bereits eine Sonnenschutzvorrichtung mit zumindest einem optischen Sonnenschutzfilter, der zumindest eine Flüssigkristallzelle aufweist, mit einer Sensoreinheit (18a; 18b), welche zumindest zu einer Erfassung einer Sonneneinstrahlung vorgesehen ist, und mit zumindest einer Steuer- und/oder Regeleinheit, welche zumindest dazu vorgesehen ist, abhängig von einer Sonneneinstrahlung eine Durchlässigkeit der Flüssigkristallzelle zu steuern und/oder zu regeln, wobei der optische Sonnenschutzfilter zumindest ein photochromatisches Schutzelement aufweist, dessen Durchlässigkeit sich insbesondere zumindest in Abhängigkeit von der Sonneneinstrahlung ändert, bekannt.

Des Weiteren sind aus der US 5 608 567 A und der US 2018/210233 A1 ebenfalls bereits Sonnenschutzvorrichtungen bekannt.

Die Aufgabe der Erfindung besteht insbesondere darin, eine gattungsgemäße Vorrichtung mit verbesserten Eigenschaften hinsichtlich eines Komforts sowie hinsichtlich einer Nutzbarkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Sonnenschutzvorrichtung, insbesondere Sonnenbrille, mit zumindest einem optischen Sonnenschutzfilter, der zumindest eine Flüssigkristallzelle aufweist.

Es wird vorgeschlagen, dass der optische Sonnenschutzfilter zumindest ein photochromatisches Schutzelement aufweist, dessen Durchlässigkeit sich insbesondere zumindest in Abhängigkeit von der Sonneneinstrahlung änderty. Es kann vorteilhaft eine hohe Anpassungsfähigkeit einer Sonnenschutzvorrichtung an eine Sonneneinstrahlung gewährleistet werden. Es kann vorteilhaft besonders einfach ein Schutz vor einer Sonneneinstrahlung gewährleistet werden. Vorteilhaft kann ein besonders hoher Komfort für einen Benutzer der Sonnenschutzvorrichtung realisiert werden.

Das photochromatische Schutzelement ist vorzugsweise transparent ausgebildet. Unter einem "photochromatischen Schutzelement" soll insbesondere eine photochromatische Linse, eine photochromatische Schicht oder dergleichen verstanden werden. Vorzugsweise soll darunter ein Element verstanden werden, dessen Durchlässigkeit von einem Lichteinfall, insbesondere einer Sonneneinstrahlung, abhängt. Bevorzugt ist das photochromatische Schutzelement dazu vorgesehen, sich mit steigendem Lichteinfall, insbesondere steigender Sonneneinstrahlung, abzudunkeln, insbesondere automatisch abzudunkeln, so dass insbesondere die Durchlässigkeit des photochromatischen Schutzelements verringert ist. Besonders bevorzugt ist das photochromatische Schutzelement dazu vorgesehen, sich mit fallendem Lichteinfall, insbesondere fallender Sonneneinstrahlung, auf das photochromatische Schutzelement, vorzugsweise automatisch, aufzuhellen, so dass insbesondere die Durchlässigkeit des photochromatischen Schutzelements vergrößert ist. Insbesondere weist das photochromatische Schutzelement bei einer Abwesenheit eines aktivierenden Lichteinfalls auf das photochromatische Schutzelement nach einer definierten Anpassungszeit eine maximale Durchlässigkeit auf. Die definierte Anpassungszeit beträgt vorzugsweise maximal 20 Minuten, besonders bevorzugt maximal 15 Minuten. Vorzugsweise hängt die definierte Anpassungszeit von einem Material ab, aus welchem das photochromatische Schutzelement gebildet ist.

Das photochromatische Schutzelement kann beispielsweise zumindest teilweise von einem Grundträger gebildet sein, der bevorzugt zumindest teilweise aus Glas, Polycarbonat, Cellulosetriacetat oder einem anderen geeigneten Kunststoff gebildet ist, wobei, insbesondere in zumindest einem Ausführungsbeispiel, Silberchloridmoleküle oder dergleichen in den Grundträger eingebettet sind. Alternativ oder zusätzlich ist denkbar, dass organische photochrome Moleküle in den Grundträger eingebettet sind. Es ist auch denkbar, dass der Grundträger von einem Bauteil bzw. Element des optischen Sonnenschutzfilters gebildet ist, beispielsweise von einer Polarisationsschicht des optischen Sonnenschutzfilters oder dergleichen. Das photochromatische Schutzelement kann beispielsweise als äußerste Schicht des optischen Sonnenschutzfilters oder an einer anderen Position innerhalb des optischen Sonnenschutzfilters angeordnet sein. Bevorzugt ist das photochromatische Schutzelement zumindest teilweise gekrümmt, insbesondere zumindest betrachtet in einer Haupterstreckungsebene des photochromatischen Schutzelements. Unter einer "Haupterstreckungsebene" einer Baueinheit oder eines Elements soll insbesondere eine Ebene verstanden werden, welche parallel zu einer größten Seitenfläche eines kleinstmöglichen gedachten Quaders ist, welcher die Baueinheit gerade noch vollständig umschließt, und insbesondere durch den Mittelpunkt des Quaders verläuft. Es ist jedoch alternativ auch denkbar, dass das photochromatische Schutzelement krümmungsfrei ausgebildet ist, insbesondere zumindest betrachtet in der Haupterstreckungsebene des photochromatischen Schutzelements.

Alternativ ist auch denkbar, dass das photochromatische Schutzelement als eine Beschichtung oder eine Folie ausgebildet ist und insbesondere auf einem Trägerelement aufgebracht ist. Das Trägerelement kann beispielsweise durch zumindest ein Bauteil bzw. Element der Sonnenschutzvorrichtung gebildet sein, insbesondere durch die Flüssigkristallzelle, die Polarisationsschicht und/oder eine Cellulosetriacetat-Schicht des optischen Sonnenschutzfilters. Das photochromatische Schutzelement liegt vorzugsweise in zumindest einem Ausführungsbeispiel an dem Trägerelement an. Besonders bevorzugt ist das photochromatische Schutzelement an dem Trägerelement befestigt. Es ist auch denkbar, dass das Trägerelement einstückig mit dem photochromatischen Schutzelement ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Alternativ oder zusätzlich ist auch denkbar, dass das photochromatische Schutzelement in einem Klebstoff enthalten ist, der dazu vorgesehen ist, zumindest zwei Bauteile bzw. Elemente des optischen Sonnenschutzfilters miteinander zu verkleben. Das photochromatische Schutzelement ist vorzugsweise an der Flüssigkristallzelle angeordnet. Das photochromatische Schutzelement liegt bevorzugt an der Flüssigkristallzelle an. Besonders bevorzugt ist das photochromatische Schutzelement an der Flüssigkristallzelle befestigt. Es ist auch denkbar, dass das photochromatische Schutzelement einstückig mit der Flüssigkristallzelle ausgebildet ist. Alternativ ist denkbar, dass zwischen dem photochromatischen Schutzelement und der Flüssigkristallzelle zumindest ein zusätzliches Element, insbesondere zumindest ein zusätzliches optisches Element des optischen Sonnenschutzfilters, bevorzugt zumindest eine zusätzliche optische Schicht, angeordnet ist. Das photochromatische Schutzelement und die Flüssigkristallzelle überschneiden sich bevorzugt zumindest teilweise, besonders bevorzugt zumindest im Wesentlichen vollständig, zumindest betrachtet entlang einer Querachse der Flüssigkristallzelle. Unter "zumindest im Wesentlichen vollständig" sollen insbesondere zumindest 50 %, bevorzugt zumindest 75 % und besonders bevorzugt zumindest 90 % eines Gesamtvolumens und/oder einer Gesamtmasse eines Objekts verstanden werden. Die Querachse der Flüssigkristallzelle verläuft zumindest im Wesentlichen senkrecht zu einer Haupterstreckungsebene der FlüssigkristallzelleBei einer Benutzung wird die Flüssigkristallzelle und/oder das photochromatische Schutzelement insbesondere zumindest im Wesentlichen parallel zu der Querachse durchblickt. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Vorzugsweise überdeckt das photochromatische Schutzelement die Flüssigkristallzelle zumindest teilweise, bevorzugt zumindest im Wesentlichen vollständig, insbesondere zumindest betrachtet in einer Richtung eines hypothetischen Lichteinfalls, besonders bevorzugt in einer Richtung einer hypothetischen Sonneneinstrahlung. Das photochromatische Schutzelement und die Flüssigkristallzelle bilden insbesondere einen Teil eines Schichtverbunds, wobei das photochromatische Schutzelement und die Flüssigkristallzelle jeweils übereinanderliegende Schichten ausbilden. Es ist alternativ denkbar, dass die Flüssigkristallzelle zumindest teilweise, bevorzugt vollständig, das photochromatische Schutzelement überdeckt, vorzugsweise zumindest betrachtet in einer Richtung eines hypothetischen Lichteinfalls, insbesondere in einer Richtung einer hypothetischen Sonneneinstrahlung. Ferner ist alternativ auch denkbar, dass sich die Flüssigkristallzelle und das photochromatische Schutzelement nicht überschneiden, bevorzugt zumindest betrachtet entlang der Querachse der Flüssigkristallzelle. In zumindest einem, insbesondere dem bevorzugten, Ausführungsbeispiel kann der optische Sonnenschutzfilter zumindest zwei photochromatische Schutzelemente aufweisen. Bevorzugt ist jedes photochromatische Schutzelement des optischen Sonnenschutzfilters jeweils einem Auge des Benutzers zugeordnet. Grundsätzlich wäre jedoch auch denkbar, dass der optische Sonnenschutzfilter lediglich ein photochromatisches Schutzelement für beide Augen des Benutzers aufweist.

Vorzugsweise sollen/soll in diesem Zusammenhang, das photochromatische Schutzelement, die Flüssigkristallzelle und/oder der optische Sonnenschutzfilter als optisches Element verstanden werden. Unter einer "Durchlässigkeit" eines optischen Elements soll in diesem Zusammenhang insbesondere ein Transmissionsgrad von Sonnenlicht durch das optische Element verstanden werden. Vorzugsweise soll darunter insbesondere verstanden werden, inwieweit das sichtbare Spektrum des Sonnenlichts durch das optische Element absorbiert und/oder reflektiert wird. Besonders bevorzugt soll darunter eine Tönung verstanden werden.

Unter einer "Sonnenschutzvorrichtung" soll in diesem Zusammenhang insbesondere eine Vorrichtung verstanden werden, die zu einem Schutz der Augen eines Benutzers vor, insbesondere störender, Sonneneinstrahlung vorgesehen ist. Vorzugsweise soll darunter insbesondere eine Vorrichtung verstanden werden, welche dazu vorgesehen ist, eine Sonneneinstrahlung zumindest zu verringern. Besonders bevorzugt ist die Sonnenschutzvorrichtung in zumindest einem Betriebszustand zu einer Abdunkelung einer, insbesondere störender, Sonneneinstrahlung auf die Augen des Benutzers vorgesehen. Es sind verschiedene, einem Fachmann als sinnvoll erscheinende Ausbildungen der Sonnenschutzvorrichtung denkbar, wie beispielsweise als eine Sonnenschutzblende, eine Sonnenbrille, eine Skibrille, eine Motorradbrille, eine Arbeitsschutzbrille oder dergleichen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner soll in diesem Zusammenhang unter einem "optischen Sonnenschutzfilter" insbesondere ein optischer Filter verstanden werden, welcher insbesondere ein Schutzglas und/oder ein Kunststoffschutzglas, insbesondere zu einem Schutz vor störender Sonneneinstrahlung, bildet. Vorzugsweise soll darunter insbesondere ein optischer Schutzfilter mit einer automatischen Verdunkelung verstanden werden. Besonders bevorzugt weist der Sonnenschutzfilter zumindest eine in der Transmission schaltbare Flüssigkristallebene auf. In zumindest einem, insbesondere einem bevorzugten, Ausführungsbeispiel kann der optische Sonnenschutzfilter zumindest zwei Flüssigkristallzellen aufweisen. Bevorzugt ist jede Flüssigkristallzelle des optischen Sonnenschutzfilters jeweils einem Auge des Benutzers zugeordnet. Grundsätzlich wäre jedoch auch denkbar, dass der optische Sonnenschutzfilter lediglich eine Flüssigkristallzelle für beide Augen des Benutzers aufweist. Es sind verschiedene, einem Fachmann als sinnvoll erscheinende Flüssigkristallzellen denkbar, wie insbesondere eine TN-Flüssigkristallzelle mit der Twisted-Nematic-Technik oder eine Flüssigkristallzelle mit der 4DFFS-Technologie. Grundsätzlich wären jedoch auch andere, einem Fachmann als sinnvoll erscheinende Ausbildungen der Flüssigkristallzellen denkbar, wie beispielsweise als STN- Flüssigkristallzellen mit der Super-Twisted-Nematic-Technik, DSTN-Flüssigkristallzellen mit der Double-Super-Twisted-Nematic-Technik, TSTN-Flüssigkristallzellen mit der Triple-Super-Twisted-Nematic-Technik, VA-Flüssigkristallzellen mit der Vertical-Alignment-Technik, insbesondere PVA/MVA-Flüssigkristallzellen mit der Patterned-Vertical-Alignment- und/oder Multi-Domain-Vertical-Alignment-Technik, IPS-Flüssigkristallzellen mit der In-Plane-Switching-Technik, FLCD-Flüssigkristallzellen, also ferroelektrische Flüssigkristallzellen, und/oder TN-Flüssigkristallzellen mit der Guest-Host-Technik. Bevorzugt ist die Flüssigkristallzelle zumindest teilweise gekrümmt, insbesondere zumindest betrachtet in der Haupterstreckungsebene der Flüssigkristallzelle. Es ist jedoch auch denkbar, dass die Flüssigkristallzelle krümmungsfrei ausgebildet ist, insbesondere zumindest betrachtet in der Haupterstreckungsebene der Flüssigkristallzelle.

Erfindungsgemäß umfasst die Sonnenschutzvorrichtung zumindest eine Sensoreinheit, welche zumindest zu einer Erfassung einer Sonneneinstrahlung vorgesehen ist. Unter einer "Sensoreinheit" soll in diesem Zusammenhang insbesondere eine Einheit verstanden werden, die dazu vorgesehen ist, zumindest eine Kenngröße und/oder eine physikalische Eigenschaft aufzunehmen, wobei die Aufnahme bevorzugt aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, einem Fachmann als sinnvoll erscheinende Sensoreinheiten für eine Sonnenschutzvorrichtung denkbar. Vorzugsweise weist die Sensoreinheit zumindest eine Photozelle, insbesondere eine Photodiode und/oder insbesondere eine Solarzelle, auf. Bevorzugt ist die Photozelle zumindest zu einer optischen Detektion eines Sonnenlichts und/oder eines künstlichen Lichts vorgesehen. Die Sensoreinheit kann beispielsweise zumindest teilweise in einem Brillenrahmen der optischen Sonnenschutzvorrichtung, zwischen der Flüssigkristallzelle und dem photochromatischen Schutzelement an dem optischen Sonnenschutzfilter, als äußerstes oder innerstes Element der Sonnenschutzvorrichtung an dem optischen Sonnenschutzfilter, insbesondere zumindest betrachtet entlang einer Richtung eines hypothetischen Lichteinfalls, besonders bevorzugt in einer Richtung einer hypothetischen Sonneneinstrahlung und/oder zumindest teilweise an weiteren bzw. verschiedenen Positionen der optischen Sonnenschutzvorrichtung angeordnet sein.

Erfindungsgemäß umfasst die Sonnenschutzvorrichtung zumindest eine Steuer- und/oder Regeleinheit, welche zumindest dazu vorgesehen ist, abhängig von einer Sonneneinstrahlung eine Durchlässigkeit der Flüssigkristallzelle zu steuern und/oder zu regeln. In diesem Zusammenhang soll unter einer "Steuer-und/oder Regeleinheit" insbesondere eine Einheit mit zumindest einer Steuerelektronik verstanden werden. Unter einer "Steuerelektronik" soll insbesondere eine Einheit mit zumindest einer elektronischen Schaltung verstanden werden, welche vorzugsweise aus Spannungs- und Vergleichsregelbausteinen besteht. Grundsätzlich kann die Steuerelektronik jedoch auch komplexer aufgebaut sein, wie insbesondere durch die Nutzung einer anwendungsspezifischen integrierten Schaltung (ASIC) und/oder eines Mikrokontrollerbausteins. Es ist denkbar, dass die Steuer- und/oder Regeleinheit in zumindest einem Betriebszustand dazu vorgesehen ist, die zumindest eine Flüssigkristallzelle des optischen Sonnenschutzfilters zu einer Erzeugung eines für einen Benutzer definierten Durchlässigkeitsverlaufs mit zumindest zwei differierenden Durchlässigkeiten anzusteuern. Unter einem "definierten Durchlässigkeitsverlauf" soll in diesem Zusammenhang insbesondere ein für einen Benutzer, insbesondere einen Träger, sichtbarer örtlicher Verlauf einer Durchlässigkeit der Flüssigkristallzelle verstanden werden.

Es wird außerdem vorgeschlagen, dass der optische Sonnenschutzfilter eine Gesamtdurchlässigkeit aufweist, welche zumindest von einer, insbesondere der zuvor bereits genannten, Durchlässigkeit der Flüssigkristallzelle und der Durchlässigkeit des photochromatischen Schutzelements gebildet ist. Es kann vorteilhaft ein besonders hoher Schutz vor einer Sonneneinstrahlung realisiert werden. Es kann vorteilhaft eine besonders hohe Anpassungsfähigkeit der Sonnenschutzvorrichtung an eine Sonneneinstrahlung gewährleistet werden. Vorzugsweise weist der optische Sonnenschutzfilter bei der maximalen Durchlässigkeit des photochromatischen Schutzelements und bei einer maximalen Durchlässigkeit der Flüssigkristallzelle eine maximale Gesamtdurchlässigkeit auf. Vorzugsweise weist der optische Sonnenschutzfilter bei einer minimalen Durchlässigkeit des photochromatischen Schutzelements und bei einer minimalen Durchlässigkeit der Flüssigkristallzelle eine minimale Gesamtdurchlässigkeit auf. Vorzugsweise ist die Durchlässigkeit der Flüssigkristallzelle in Abhängigkeit von der Durchlässigkeit des photochromatischen Elements einstellbar. Bevorzugt ist die Durchlässigkeit der Flüssigkristallzelle mittels der Steuer- und/oder Regeleinheit in Abhängigkeit von der Durchlässigkeit des photochromatischen Schutzelements einstellbar. Es ist alternativ oder zusätzlich auch denkbar, dass die Durchlässigkeit der Flüssigkristallzelle unabhängig von der Durchlässigkeit des photochromatischen Schutzelements einstellbar ist. In zumindest einem Ausführungsbeispiel ist alternativ denkbar, dass die Durchlässigkeit des photochromatischen Schutzelements von der Durchlässigkeit der Flüssigkristallzelle abhängt. Die maximale Durchlässigkeit der Flüssigkristallzelle ist vorzugsweise verschieden von der maximalen Durchlässigkeit des photochromatischen Schutzelements, insbesondere kleiner oder größer. Es ist alternativ auch denkbar, dass die maximale Durchlässigkeit des photochromatischen Schutzelements der maximalen Durchlässigkeit der Flüssigkristallzelle entspricht. Es ist denkbar, dass die minimale Durchlässigkeit des photochromatischen Schutzelements verschieden, insbesondere größer oder kleiner, oder gleich der Durchlässigkeit der Flüssigkristallzelle ist. Bevorzugt sind/ist das photochromatische Schutzelement und/oder die Flüssigkristallzelle jeweils bei der maximalen Durchlässigkeit tönungsfrei. Es ist alternativ denkbar, dass das photochromatische Schutzelement und/oder die Flüssigkristallzelle jeweils bei der maximalen Durchlässigkeit eine Grundtönung aufweisen/aufweist.

Ferner wird vorgeschlagen, dass die Sonnenschutzvorrichtung eine, insbesondere gekrümmte, Schutzschicht aufweist, die als äußerste Schicht an dem optischen Sonnenschutzfilter angeordnet ist, wobei das photochromatische Schutzelement auf der Schutzschicht aufgebracht ist oder in die Schutzschicht eingebettet ist. Es kann vorteilhaft ein besonders hoher Schutz eines Trägers der Sonnenschutzvorrichtung gewährleistet werden. Es kann vorteilhaft ein besonders robuster optischer Sonnenschutzfilter realisiert werden. Vorzugsweise bildet die Schutzschicht das Trägerelement oder den Grundträger für das photochromatische Schutzelement. Die Schutzschicht ist insbesondere als eine Cellulosetriacetat-Schicht ausgebildet. Es ist jedoch auch denkbar, dass die Schutzschicht aus einem anderen, dem Fachmann als sinnvoll erscheinenden Material gebildet ist. Grundsätzlich ist auch denkbar, dass die Schutzschicht an einer anderen Position des optischen Sonnenschutzfilters angeordnet ist. Die Schutzschicht ist bevorzugt dazu vorgesehen, zumindest den optischen Sonnenschutzfilter vor einer Beschädigung zu schützen, insbesondere vor einer Beschädigung durch Fette, Öle, aromatische Kohlenwasserstoffe, Lösungsmittel und/oder dergleichen. Die Schutzschicht kann beispielsweise gekrümmt oder krümmungsfrei ausgebildet sein. Bevorzugt ist die Schutzschicht zumindest teilweise gekrümmt, insbesondere zumindest betrachtet in einer Haupterstreckungsebene der Schutzschicht. Vorzugsweise verläuft die Haupterstreckungsebene der Schutzschicht in zumindest einem Ausführungsbeispiel, insbesondere bei dem das photochromatische Schutzelement auf der Schutzschicht aufgebracht ist, zumindest im Wesentlichen parallel zu einer Haupterstreckungsebene des photochromatischen Schutzelements. Besonders bevorzugt ist eine Krümmung der Schutzschicht zumindest im Wesentlichen identisch zu einer Krümmung des photochromatischen Schutzelements. Unter einer "Krümmung" in einem Punkt einer Fläche, die von Null verschieden ist, soll in diesem Zusammenhang insbesondere eine quadratisch mit einem Abstand zu dem Punkt der Fläche anwachsende Abweichung verstanden werden. Vorzugsweise überdeckt die Schutzschicht die Flüssigkristallzelle und/oder das photochromatische Schutzelement zumindest teilweise, bevorzugt vollständig, insbesondere zumindest betrachtet entlang einer Richtung eines hypothetischen Lichteinfalls, besonders bevorzugt in einer Richtung einer hypothetischen Sonneneinstrahlung. In zumindest einem Ausführungsbeispiel ist das photochromatische Schutzelement zwischen der Schutzschicht und der Flüssigkristallzelle angeordnet. Es ist jedoch in zumindest einem weiteren Ausführungsbeispiel denkbar, dass die Schutzschicht zwischen dem photochromatischen Schutzelement und der Flüssigkristallzelle angeordnet ist, wobei die Schutzschicht insbesondere zumindest teilweise, bevorzugt vollständig, von dem photochromatischen Schutzelement überdeckt ist, vorzugsweise zumindest betrachtet in einer Richtung eines hypothetischen Lichteinfalls, insbesondere in einer Richtung einer hypothetischen Sonneneinstrahlung.

Des Weiteren wird vorgeschlagen, dass der optische Sonnenschutzfilter zumindest eine, insbesondere die zuvor bereits genannte, Polarisationsschicht aufweist, wobei das photochromatische Schutzelement, insbesondere in zumindest einem Ausführungsbeispiel, auf der Polarisationsschicht aufgebracht ist oder in die Polarisationsschicht eingebettet ist. Es kann vorteilhaft ein besonders hoher Schutz eines Trägers der Sonnenschutzvorrichtung gewährleistet werden. Vorteilhaft kann das photochromatische Schutzelement besonders platzsparend in die Sonnenschutzvorrichtung integriert werden. Die Polarisationsschicht kann gekrümmt oder krümmungsfrei ausgebildet sein. Bevorzugt ist die Polarisationsschicht zumindest teilweise gekrümmt, insbesondere zumindest betrachtet in einer Haupterstreckungsebene der Polarisationsschicht. Vorzugsweise verläuft die Haupterstreckungsebene der Polarisationsschicht in zumindest einem Ausführungsbeispiel, insbesondere bei dem das photochromatische Schutzelement auf der Polarisationsschicht aufgebracht ist, zumindest im Wesentlichen parallel zu der Haupterstreckungsebene des photochromatischen Schutzelements. Besonders bevorzugt ist eine Krümmung der Polarisationsschicht zumindest im Wesentlichen identisch zu einer Krümmung des photochromatischen Schutzelements. Vorzugsweise überdeckt die Polarisationsschicht die Flüssigkristallzelle und/oder das photochromatische Schutzelement zumindest teilweise, bevorzugt vollständig, insbesondere zumindest betrachtet entlang einer Richtung eines hypothetischen Lichteinfalls, besonders bevorzugt in einer Richtung einer hypothetischen Sonneneinstrahlung.

Ferner wird vorgeschlagen, dass die Sonnenschutzvorrichtung, insbesondere zumindest in einem Ausführungsbeispiel, eine, insbesondere die zuvor bereits genannte, Sensoreinheit und eine Sensorabdeckung aufweist, wobei die Sensorabdeckung eine Sensorfläche der Sensoreinheit zumindest teilweise abdeckt und zumindest teilweise aus einem photochromatischen Material gebildet ist. Es kann vorteilhaft eine hohe Genauigkeit bei einer Anpassung des optischen Sonnenschutzfilters an eine Sonneneinstrahlung bei gleichzeitig besonders hoher Robustheit der Sonnenschutzvorrichtung gewährleistet werden. Unter einer "Sensorabdeckung" soll in diesem Zusammenhang insbesondere ein Element verstanden werden, welches die Sensoreinheit, vorzugsweise in eine Detektionsrichtung der Sensoreinheit, zumindest teilweise abdeckt, insbesondere überdeckt. Vorzugsweise soll darunter ein Element verstanden werden, welches die Sensorfläche der Sensoreinheit zumindest teilweise abdeckt, insbesondere überdeckt. Bevorzugt soll darunter eine Abdeckung verstanden werden, welche die Sensoreinheit, vorzugsweise in einer Detektionsrichtung der Sensoreinheit, insbesondere zu einem Schutz, wie beispielsweise vor Stößen oder dergleichen, zumindest teilweise überdeckt. Besonders bevorzugt soll darunter eine Abdeckung verstanden werden, welche die Sensoreinheit, vorzugsweise in eine Detektionsrichtung der Sensoreinheit, insbesondere um die Sensoreinheit für einen Betrachter von außen unsichtbar zu integrieren, zumindest teilweise abdeckt. Ferner soll in diesem Zusammenhang unter einer "Sensorfläche" der Sensoreinheit insbesondere eine Detektionsfläche der Sensoreinheit verstanden werden. Vorzugsweise soll darunter eine Fläche der Sensoreinheit verstanden werden, auf welcher die Sensoreinheit einen Lichteinfall, insbesondere eine Sonneneinstrahlung, erfassen kann. Besonders bevorzugt soll darunter eine Zelloberfläche der Sensoreinheit verstanden werden. Vorzugsweise ist die Sensorfläche nach vorne, also insbesondere in Richtung einer hypothetischen Blickrichtung eines Benutzers, gerichtet. Bevorzugt erstreckt sich die Sensorfläche im Wesentlichen parallel zu einer Stirnseite der Sonnenschutzvorrichtung. Darunter, dass "die Sensorabdeckung die Sensorfläche der Sensoreinheit zumindest teilweise abdeckt" soll in diesem Zusammenhang insbesondere verstanden werden, dass zumindest 10%, vorzugsweise zumindest 30%, und besonders bevorzugt zumindest 50% aller Flächennormalen der Sensorfläche in einer von der Sensoreinheit wegweisenden Richtung die Sensorabdeckung schneiden. Vorzugsweise ist die Sensorabdeckung aus einem Material gebildet, welches dem Material des photochromatischen Schutzelements entspricht. Vorzugsweise ist die Sensorabdeckung beabstandet zu dem photochromatischen Schutzelement angeordnet. Es ist alternativ denkbar, dass die Sensorabdeckung von dem photochromatischen Schutzelement gebildet ist. Insbesondere weist die Sensorabdeckung eine maximale Dicke auf, vorzugsweise zumindest betrachtet entlang einer Querachse der Sensorabdeckung, die einer maximalen Dicke des photochromatischen Schutzelements, zumindest betrachtet entlang einer Querachse des photochromatischen Schutzelements, entspricht. Vorzugsweise verläuft die Querachse der Sensorabdeckung zumindest im Wesentlichen senkrecht zu einer Haupterstreckungsebene der Sensorabdeckung. Vorzugsweise verläuft die Querachse des photochromatischen Schutzelements zumindest im Wesentlichen senkrecht zu der Haupterstreckungsebene des photochromatischen Schutzelements. Es ist alternativ auch denkbar, dass die Sensorabdeckung aus einem photochromatischen Material gebildet ist, das verschieden ist von einem Material, aus dem das photochromatische Schutzelement gebildet ist. Es ist alternativ denkbar, dass die maximale Dicke der Sensorabdeckung, vorzugsweise zumindest betrachtet entlang der Querachse der Sensorabdeckung, verschieden ist von der maximalen Dicke des photochromatischen Schutzelements, vorzugsweise zumindest betrachtet entlang der Querachse des photochromatischen Schutzelements. Vorzugsweise entspricht eine Durchlässigkeit der Sensorabdeckung der Durchlässigkeit des photochromatischen Schutzelements. Bevorzugt entspricht eine Abhängigkeit der Durchlässigkeit der Sensorabdeckung von der Sonneneinstrahlung der Abhängigkeit der Durchlässigkeit des photochromatischen Schutzelements von der Sonneneinstrahlung.

Erfindungsgemäß wird vorgeschlagen, dass die Sensoreinheit zumindest teilweise zwischen dem photochromatischen Schutzelement und der Flüssigkristallzelle angeordnet ist. Es kann vorteilhaft ein besonders einfacher Aufbau der Sonnenschutzvorrichtung bei einer gleichzeitig besonders hohen Genauigkeit einer Anpassung des optischen Sonnenschutzfilters an eine Sonneneinstrahlung realisiert werden. Erfindungsgemäß ist die Sensoreinheit dazu vorgesehen, eine Sonneneinstrahlung nach einem Passieren des photochromatischen Schutzelements zu erfassen. Bevorzugt überschneidet sich eine, insbesondere die zuvor bereits genannte, Sensorfläche zumindest teilweise mit dem photochromatischen Schutzelement, zumindest betrachtet entlang der Querachse des photochromatischen Schutzelements. Vorzugsweise überdeckt das photochromatische Schutzelement die Sensorfläche zumindest teilweise, bevorzugt vollständig, insbesondere zumindest betrachtet in einer Detektionsrichtung der Sensoreinheit.

Außerdem wird vorgeschlagen, dass die Sonnenschutzvorrichtung einen, insbesondere den zuvor bereits genannten, Brillenrahmen umfasst, welcher zur Aufnahme des optischen Sonnenschutzfilters vorgesehen ist. Es kann vorteilhaft eine Ausbildung der Sonnenschutzvorrichtung erreicht werden. Es kann vorteilhaft eine Sonnenschutzvorrichtung bereitgestellt werden, die zuverlässig in einem Gesicht des Benutzers angeordnet werden kann. Es kann vorteilhaft eine brillenartige Ausbildung der Sonnenschutzvorrichtung bereitgestellt werden. Vorzugsweise weist der Brillenrahmen zumindest einen, bevorzugt zumindest zwei, Aufnahmebereich/e auf, die jeweils zu einer Aufnahme einer Flüssigkristallzelle und/oder eines photochromatischen Schutzelements des optischen Sonnenschutzfilters vorgesehen ist/sind. Unter einem "Brillenrahmen" soll in diesem Zusammenhang insbesondere ein Rahmen verstanden werden, welcher zu einer Anordnung der Sonnenschutzvorrichtung in einem Gesicht des Benutzers vorgesehen ist. Vorzugsweise ist der Rahmen zu einer Anordnung der Sonnenschutzvorrichtung auf einer Nase sowie den Ohren des Benutzers vorgesehen. Besonders bevorzugt ist der Brillenrahmen von einem Brillengestell gebildet. Es ist denkbar, dass die Sensorabdeckung, insbesondere zumindest in einem Ausführungsbeispiel, einstückig mit dem Brillenrahmen ausgebildet ist.

Ferner geht die Erfindung aus von einem Verfahren zu einem Betrieb einer, insbesondere der zuvor bereits genannten, Sonnenschutzvorrichtung. Es wird vorgeschlagen, dass die Durchlässigkeit der Flüssigkristallzelle in zumindest einem Verfahrensschritt zumindest in Abhängigkeit von der Durchlässigkeit des photochromatischen Schutzelements eingestellt wird. Es kann vorteilhaft eine besonders genaue Anpassung eines optischen Sonnenschutzfilters an eine Sonneneinstrahlung erreicht werden. Vorteilhaft kann ein hoher Komfort für einen Benutzer der Sonnenschutzvorrichtung realisiert werden. Bevorzugt wird die Durchlässigkeit der Flüssigkristallzelle in zumindest einem Verfahrensschritt in Abhängigkeit von der Sonneneinstrahlung eingestellt. Vorzugsweise wird die Durchlässigkeit der Flüssigkristallzelle zumindest in dem Verfahrensschritt in Abhängigkeit von der Sonneneinstrahlung mittels der Steuer- und/oder Regeleinheit eingestellt und/oder geregelt. Es ist denkbar, dass die Flüssigkristallzelle des optischen Sonnenschutzfilters zu einer Erzeugung eines für einen Benutzer definierten Durchlässigkeitsverlaufs angesteuert und/oder geregelt wird. Die Sonneneinstrahlung wird bevorzugt mittels der Sensoreinheit erfasst. Die Sonneneinstrahlung wird vorzugsweise nach einem Passieren des photochromatischen Schutzelements erfasst. Es ist auch denkbar, insbesondere in zumindest einem Ausführungsbeispiel, dass die Sonneneinstrahlung nach einem Passieren der Sensorabdeckung erfasst wird.

Ferner wird ein Verfahren zu einer Herstellung einer, insbesondere der zuvor bereits genannten, Sonnenschutzvorrichtung vorgeschlagen. Vorzugsweise werden in zumindest einem Verfahrensschritt das photochromatische Schutzelement und die Flüssigkristallzelle einstückig in einem Spritzgussverfahren hergestellt. Bevorzugt werden in zumindest einem Verfahrensschritt das photochromatische Schutzelement und die Schutzschichteinstückig in einem Spritzgussverfahren hergestellt. Alternativ oder zusätzlich werden in zumindest einem Verfahrensschritt die Sensorabdeckung und der Brillenrahmen einstückig in einem Spritzgussverfahren hergestellt. Es kann vorteilhaft eine besonders einfache Herstellung der Sonnenschutzvorrichtung realisiert werden.

Die erfindungsgemäße Sonnenschutzvorrichtung, das erfindungsgemäße Verfahren zum Betrieb einer Sonnenschutzvorrichtung und/oder das erfindungsgemäße Verfahren zur Herstellung einer Sonnenschutzvorrichtung sollen/soll hierbei nicht auf die oben beschriebene Anwendung und Ausführungsform beschränkt sein. Insbesondere können/kann die erfindungsgemäße Sonnenschutzvorrichtung, das erfindungsgemäße Verfahren zum Betrieb einer Sonnenschutzvorrichtung und/oder die erfindungsgemäße Herstellung einer Sonnenschutzvorrichtung zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Sonnenschutzvorrichtung in einer ersten Ausführung und einen Benutzer, welcher die erfindungsgemäße Sonnenschutzvorrichtung trägt, in einer schematischen Frontalansicht,
- Fig. 2: einen Teilausschnitt der erfindungsgemäßen Sonnenschutzvorrichtung mit einem optischen Sonnenschutzfilter in einer schematischen Schnittdarstellung,
- Fig. 3: einen schematischen Ablauf eines erfindungsgemäßen Verfahrens zu einem Betrieb der erfindungsgemäßen Sonnenschutzvorrichtung,
- Fig. 4: einen schematischen Ablauf eines erfindungsgemäßen Verfahrens zu einer Herstellung der erfindungsgemäßen Sonnenschutzvorrichtung,
- Fig. 5: eine erfindungsgemäße Sonnenschutzvorrichtung in einer zweiten Ausführung und einen Benutzer, welcher die erfindungsgemäße Sonnenschutzvorrichtung trägt, in einer schematischen Frontalansicht und
- Fig. 6: einen Teilausschnitt der erfindungsgemäßen Sonnenschutzvorrichtung in der zweiten Ausführung mit einem optischen Sonnenschutzfilter in einer schematischen Schnittdarstellung.

### Beschreibung der Ausführungsbeispiele

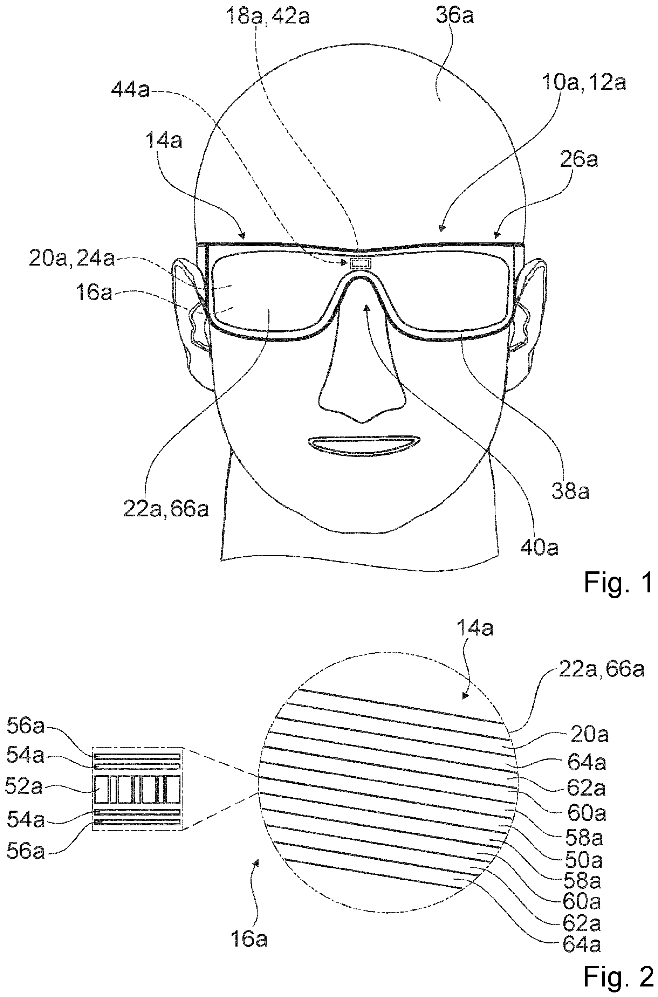

Die Figur 1 zeigt eine Sonnenschutzvorrichtung 10a. Die Sonnenschutzvorrichtung 10a ist von einer Sonnenbrille 12a gebildet. Es ist alternativ auch denkbar, dass die Sonnenschutzvorrichtung 10a als eine Sonnenschutzblende, eine Skibrille, eine Motorradbrille, eine Arbeitsschutzbrille oder dergleichen ausgebildet ist. Die Sonnenbrille 12a dunkelt selbsttätig in Abhängigkeit von einer Sonneneinstrahlung ab. Grundsätzlich wäre jedoch auch eine andere, einem Fachmann als sinnvoll erscheinende Ausbildung der Sonnenschutzvorrichtung 10a denkbar. Die Sonnenschutzvorrichtung 10a ist zumindest in einem Betriebszustand zu einer Abdunkelung einer Sonneneinstrahlung auf die Augen eines Benutzers 36a vorgesehen.

Die Sonnenschutzvorrichtung 10a umfasst zumindest einen Brillenrahmen 26a. Der Brillenrahmen 26a ist von einem Brillengestell gebildet. Der Brillenrahmen 26a besteht im Wesentlichen aus Kunststoff. Grundsätzlich wäre jedoch auch ein anderes, einem Fachmann als sinnvoll erscheinendes Material denkbar, wie beispielsweise Holz, Metall und/oder ein Faserverbundwerkstoff. Der Brillenrahmen 26a weist einen Grundrahmen 38a sowie zwei an dem Grundrahmen 38a beweglich gelagerte Brillenbügel auf. Der Grundrahmen 38a weist einen Nasenausschnitt 40a zu einer Auflage auf einer Nase des Benutzers 36a auf. Die Brillenbügel sind jeweils zu einer Auflage auf den Ohren des Benutzers 36a vorgesehen. Der Grundrahmen 38a besteht aus zwei Rahmenteilen. Grundsätzlich wäre jedoch auch denkbar, dass der Grundrahmen 38a einteilig ausgebildet ist. Die beiden Rahmenteile sind jeweils von einem Schalenteil gebildet. Ein erstes Rahmenteil ist auf einer Vorderseite angeordnet und ein zweites Rahmenteil ist auf einer Rückseite angeordnet. Die Rahmenteile sind miteinander verklebt, wobei ein Hohlraum zwischen den Rahmenteilen abgedichtet wird. Komponenten, welche innerhalb des Grundrahmens 38a angeordnet sind, werden vor einem Verkleben in die Rahmenteile eingelegt.

Die Sonnenschutzvorrichtung 10a umfasst zumindest einen optischen Sonnenschutzfilter 14a. Der Grundrahmen 38a ist zu einer Aufnahme des optischen Sonnenschutzfilters 14a vorgesehen. Der optische Sonnenschutzfilter 14a ist in dem Brillenrahmen 26a aufgenommen. Eine Lichtdurchlässigkeit des optischen Sonnenschutzfilters 14a ist einstellbar ausgeführt. Der optische Sonnenschutzfilter 14a ist im Wesentlichen transparent ausgebildet, wobei eine Transmission des optischen Sonnenschutzfilters 14a zumindest teilweise elektrisch veränderbar ausgebildet ist. Der optische Sonnenschutzfilter 14a weist zumindest eine Flüssigkristallzelle 16a auf. Die Flüssigkristallzelle 16a ist in dem Brillenrahmen 26a aufgenommen. Der Grundrahmen 38a des Brillenrahmens 26a weist eine Ausnehmung auf, in welcher die Flüssigkristallzelle 16a aufgenommen ist.

Die Flüssigkristallzelle 16a weist eine in der Transmission schaltbare Flüssigkristallebene 50a auf. Die Flüssigkristallzelle 16a des optischen Sonnenschutzfilters 14a ist von einer Kunststoff-Flüssigkristallzelle gebildet. Die Flüssigkristallzelle 16a besteht aus mehreren Schichten (vgl. Figur 2). Eine Anzahl von Schichten ist hierbei lediglich beispielhaft und kann grundsätzlich variieren. Die Flüssigkristallzelle 16a ist von einer TN-Flüssigkristallzelle gebildet. Die Flüssigkristallzelle 16a basiert daher auf der Twisted-Nematic-Technik. Grundsätzlich wäre jedoch auch eine andere, einem Fachmann als sinnvoll erscheinende Ausbildung der Flüssigkristallzelle 16a denkbar. Die Flüssigkristallebene 50a ist von einer transluzenten Flüssigkristallebene gebildet. Die Flüssigkristallebene 50a weist eine Flüssigkristallschicht 52a auf. In der Flüssigkristallschicht 52a befindet sich eine Vielzahl von Kristallmolekülen sowie Abstandshalter. Auf beiden Seiten der Flüssigkristallschicht 52a ist jeweils eine Polyimid-Schicht 54a angeordnet. Die Polyimid-Schichten 54a dienen insbesondere einer Ausrichtung der Kristallmoleküle. Auf den der Flüssigkristallschicht 52a abgewandten Seiten der Polyimid-Schichten 54a ist jeweils eine Elektrodenschicht 56a angeordnet. Die Elektrodenschichten 56a sind jeweils von einer transparenten Indiumzinnoxid-Schicht gebildet. Ferner befindet sich auf beiden Seiten der Flüssigkristallebene 50a jeweils eine Polarisationsschicht 58a. Die Polarisationsschichten 58a dienen jeweils zu einer Polarisation einfallenden Lichts. Auf den der Flüssigkristallebene 50a abgewandten Seiten der Polarisationsschichten 58a ist jeweils eine Scheibe 60a angeordnet. Die Scheiben 60a bestehen aus Polykarbonat. Auf einer Außenseite der Scheiben 60a ist jeweils eine Antireflexionsschicht 62a sowie eine Hartschicht 64a aufgebracht. Die Flüssigkristallzelle 16a des optischen Sonnenschutzfilters 14a ist über eine gesamte Erstreckung gekrümmt ausgebildet.

Der optische Sonnenschutzfilter 14a umfasst zumindest ein photochromatisches Schutzelement 20a. Das photochromatische Schutzelement 20a ist in der Ausnehmung des Brillenrahmens 26a aufgenommen. Das photochromatische Schutzelement 20a ist als eine Beschichtung oder eine Folie ausgebildet. Das photochromatische Schutzelement 20a besteht zumindest teilweise aus Silberchloridmolekülen, organischen photochromatischen Molekülen und/oder dergleichen. Die Sonnenschutzvorrichtung 10a umfasst zumindest eine Schutzschicht 22a, auf der das photochromatische Schutzelement 20a aufgebracht ist. Es ist alternativ denkbar, dass das photochromatische Schutzelement 20a in die Schutzschicht 22a eingebettet ist. Grundsätzlich ist auch denkbar, dass das photochromatische Schutzelement 22a in/auf einem anderen Bauteil bzw. Element des optischen Sonnenschutzfilters 14a eingebettet/aufgebracht ist. Ferner ist alternativ denkbar, dass das photochromatische Schutzelement 20a in einem Klebstoff enthalten ist, der dazu vorgesehen ist, zumindest zwei Bauteile bzw. Elemente des optischen Sonnenschutzfilters 14a miteinander zu verkleben. Die Schutzschicht 22a ist als eine Cellulosetriacetat-Schicht 66a ausgebildet. Es ist jedoch auch denkbar, dass die Schutzschicht 22a aus einem anderen, dem Fachmann als sinnvoll erscheinenden Material gebildet ist. Die Schutzschicht 22a ist als äußerste Schicht an dem optischen Sonnenschutzfilter 14a angeordnet (vgl. Figur 2). Es ist grundsätzlich auch denkbar, dass die Schutzschicht 22a an einer anderen Position innerhalb des optischen Sonnenschutzfilters 14a angeordnet ist. Die Schutzschicht 22a ist dazu vorgesehen, zumindest den optischen Sonnenschutzfilter 14a vor einer Beschädigung zu schützen, insbesondere vor einer Beschädigung durch Fette, Öle, aromatische Kohlenwasserstoffe, Lösungsmittel und/oder dergleichen. Die Schutzschicht 22a ist gekrümmt ausgebildet, wobei insbesondere grundsätzlich auch denkbar ist, dass die Schutzschicht 22a krümmungsfrei ausgebildet ist, zumindest betrachtet in einer Haupterstreckungsebene der Schutzschicht 22a. Die Haupterstreckungsebene der Schutzschicht 22a verläuft zumindest im Wesentlichen parallel zu einer Haupterstreckungsebene des photochromatischen Schutzelements 20a. Die Krümmung der Schutzschicht 22a ist zumindest im Wesentlichen identisch zu einer Krümmung des photochromatischen Schutzelements 20a. Die Durchlässigkeit des photochromatischen Schutzelements 20a ändert sich zumindest in Abhängigkeit von der Sonneneinstrahlung. Das photochromatische Schutzelement 20a ist transparent und als photochromatische Schicht ausgebildet. Das photochromatische Schutzelement 20a ist dazu vorgesehen, sich mit steigendem Lichteinfall, insbesondere der Sonneneinstrahlung, automatisch abzudunkeln, so dass die Durchlässigkeit des photochromatischen Schutzelements 20a verringert ist. Das photochromatische Schutzelement 20a ist zumindest dazu vorgesehen, sich mit fallender Sonneneinstrahlung aufzuhellen, sodass die Durchlässigkeit des photochromatischen Schutzelements 20a vergrößert ist. Das photochromatische Schutzelement 20a weist bei einer Abwesenheit eines aktivierenden Lichteinfalls auf das photochromatische Schutzelement 20a nach einer definierten Anpassungszeit eine maximale Durchlässigkeit auf. Die definierte Anpassungszeit beträgt maximal 15 Minuten. Die definierte Anpassungszeit hängt von einem Material ab, aus welchem das photochromatische Schutzelement 20a gebildet ist.

Das photochromatische Schutzelement 20a ist an der Flüssigkristallzelle 16a angeordnet (vgl. Figur 2). Das photochromatische Schutzelement 20a liegt an der Flüssigkristallzelle 16a an. Das photochromatische Schutzelement 20a ist an der Flüssigkristallzelle 16a befestigt. Es ist auch denkbar, dass das photochromatische Schutzelement 20a einstückig mit der Flüssigkristallzelle 16a ausgebildet ist. Alternativ ist denkbar, dass zwischen dem photochromatischen Schutzelement 20a und der Flüssigkristallzelle 16a zumindest ein zusätzliches Element, insbesondere zumindest ein zusätzliches optisches Element des optischen Sonnenschutzfilters 14a, bevorzugt zumindest eine zusätzliche optische Schicht, angeordnet ist. Das photochromatische Schutzelement 20a überschneidet sich mit der Flüssigkristallzelle 16a zumindest im Wesentlichen vollständig, zumindest betrachtet entlang einer Querachse der Flüssigkristallzelle 16a. Die Querachse der Flüssigkristallzelle 16a verläuft zumindest im Wesentlichen senkrecht zu einer Haupterstreckungsebene der Flüssigkristallzelle 16a. Bei einer Benutzung wird die Flüssigkristallzelle 16a und das photochromatische Schutzelement 20a zumindest im Wesentlichen parallel zu der Querachse durchblickt. Das photochromatische Schutzelement 20a überdeckt die Flüssigkristallzelle 16a zumindest im Wesentlichen vollständig, zumindest betrachtet in einer Richtung einer hypothetischen Sonneneinstrahlung. Das photochromatische Schutzelement 20a und die Flüssigkristallzelle 16a bilden einen Teil eines Schichtverbunds, wobei das photochromatische Schutzelement 20a und die Flüssigkristallzelle 16a jeweils übereinanderliegende Schichten ausbilden..

Die Schutzschicht 22a überdeckt die Flüssigkristallzelle16a und das photochromatische Schutzelement 20a zumindest teilweise, bevorzugt vollständig, zumindest betrachtet entlang einer Richtung eines hypothetischen Lichteinfalls, besonders bevorzugt in einer Richtung einer hypothetischen Sonneneinstrahlung. Das photochromatische Schutzelement 20a ist zwischen der Schutzschicht 22a und der Flüssigkristallzelle 16a angeordnet. Es ist jedoch in zumindest einem weiteren Ausführungsbeispiel denkbar, dass die Schutzschicht 22a zwischen dem photochromatischen Schutzelement 20a und der Flüssigkristallzelle 16a angeordnet ist, wobei die Schutzschicht 22a insbesondere zumindest teilweise, bevorzugt vollständig, von dem photochromatischen Schutzelement 20a überdeckt ist, zumindest betrachtet in einer Richtung eines hypothetischen Lichteinfalls, insbesondere in einer Richtung einer hypothetischen Sonneneinstrahlung.

Des Weiteren weist die Sonnenschutzvorrichtung 10a eine Sensoreinheit 18a auf. Die Sensoreinheit 18a ist zu einer Erfassung einer Sonneneinstrahlung vorgesehen. Die Sensoreinheit 18a weist eine Sensorfläche 42a auf, welche zu einer Erfassung einer Sonneneinstrahlung vorgesehen ist. Die Sensoreinheit 18a weist eine oder mehrere Photodioden auf, die von einer Photozelle gebildet ist/sind. Grundsätzlich wäre jedoch auch denkbar, dass die Sensoreinheit 18a beispielsweise eine Solarzelle aufweist. Ferner wäre beispielsweise denkbar, dass zumindest ein Teil der Sensoreinheit 18a, wie beispielsweise einzelne Photodioden, als Streifen in einem Stirnbereich der Sonnenschutzvorrichtung 10a angeordnet sind.

Ferner weist die Sonnenschutzvorrichtung 10a zumindest eine Steuer- und/oder Regeleinheit 44a auf. Die Steuer- und/oder Regeleinheit 44a ist dazu vorgesehen, abhängig von einer Sonneneinstrahlung eine Durchlässigkeit des optischen Sonnenschutzfilters 14a zu steuern. Die Steuer- und/oder Regeleinheit 44a ist dazu nicht weiter sichtbar mit der Sensoreinheit 18a verbunden. Ferner ist die Steuer- und/oder Regeleinheit 44a nicht weiter sichtbar mit der Flüssigkristallzelle 16a des optischen Sonnenschutzfilters 14a verbunden. Die Steuer- und/oder Regeleinheit 44a ist nicht weiter dargestellt elektrisch mit den Elektrodenschichten 56a der Flüssigkristallzelle 16a verbunden. Die Steuer- und/oder Regeleinheit 44a ist in dem Brillenrahmen 26a angeordnet. Die Steuer- und/oder Regeleinheit 44a ist in dem Grundrahmen 38a des Brillenrahmens 26a oberhalb des Nasenausschnitts 40a angeordnet. Die Steuer- und/oder Regeleinheit 44a ist in den Brillenrahmen 26a integriert. Die Steuer- und/oder Regeleinheit 44a ist in einem Aufnahmebereich des Grundrahmens 38a angeordnet. Der Aufnahmebereich des Grundrahmens 38a ist oberhalb des Nasenausschnitts 40a angeordnet. Der Aufnahmebereich des Grundrahmens 38a ist von einer Vertiefung gebildet. Grundsätzlich wäre jedoch auch eine andere, einem Fachmann als sinnvoll erscheinende Anordnung der Steuer- und/oder Regeleinheit 44a denkbar.

Die Sensoreinheit 18a ist in einem Betriebszustand zu einer zumindest teilweise Bereitstellung einer Energie zu einer Ansteuerung der Flüssigkristallzelle 16a des optischen Sonnenschutzfilters 14a vorgesehen. Die Sensoreinheit 18a ist während eines Betriebs der Sonnenschutzvorrichtung 10a zu einer vollständigen Bereitstellung einer Energie zu einer Ansteuerung der Flüssigkristallzelle 16a des optischen Sonnenschutzfilters 14a vorgesehen. Die Sensoreinheit 18a ist während eines Betriebs der Sonnenschutzvorrichtung 10a zu einer vollständigen Gewinnung einer zu einer Ansteuerung der Flüssigkristallzelle 16a des optischen Sonnenschutzfilters 14a benötigten Energie vorgesehen. Die Sonnenschutzvorrichtung 10a ist batterielos ausgebildet.

Der optische Sonnenschutzfilter 14a weist eine Gesamtdurchlässigkeit auf, welche zumindest von einer Durchlässigkeit der Flüssigkristallzelle 16a und der Durchlässigkeit des photochromatischen Schutzelements 20a gebildet ist. Der optische Sonnenschutzfilter 14a weist bei einer maximalen Durchlässigkeit des photochromatischen Schutzelements 20a und bei einer maximalen Durchlässigkeit der Flüssigkristallzelle 16a eine maximale Gesamtdurchlässigkeit auf. Die Durchlässigkeit der Flüssigkristallzelle 16a ist in Abhängigkeit von der Durchlässigkeit von dem photochromatischen Schutzelement 20a einstellbar. Die Durchlässigkeit der Flüssigkristallzelle 16a ist mittels der Steuer- und/oder Regeleinheit 44a in Abhängigkeit von der Durchlässigkeit von dem photochromatischen Schutzelement 20a einstellbar. Es ist alternativ oder zusätzlich auch denkbar, dass die Durchlässigkeit der Flüssigkristallzelle 16a unabhängig von der Durchlässigkeit des photochromatischen Schutzelements 20a einstellbar ist. Die maximale Durchlässigkeit der Flüssigkristallzelle 16a ist verschieden von der maximalen Durchlässigkeit des photochromatischen Schutzelements 20a, insbesondere kleiner oder größer. Es ist alternativ auch denkbar, dass die maximale Durchlässigkeit der Flüssigkristallzelle 16a der maximalen Durchlässigkeit des photochromatischen Schutzelements 20a entspricht. Dies gilt analog für die minimalen Durchlässigkeiten der Flüssigkristallzelle 16a und des photochromatischen Schutzelements 20a. Das photochromatischen Schutzelement 20a und die Flüssigkristallzelle 16a sind bei der maximalen Durchlässigkeit tönungsfrei. Alternativ ist denkbar, dass das photochromatische Schutzelement 20a und/oder die Flüssigkristallzelle 16a bei der maximalen Durchlässigkeit eine Grundtönung aufweisen/aufweist.

Die Sensoreinheit 18a ist zumindest teilweise zwischen dem photochromatischen Schutzelement 20a und der Flüssigkristallzelle 16a angeordnet ist. Die Sensoreinheit 18a ist zumindest dazu vorgesehen, eine Sonneneinstrahlung nach einem Passieren des photochromatischen Schutzelements 20a zu erfassen. Die Sensorfläche 42a überschneidet sich zumindest teilweise mit dem photochromatischen Schutzelement 20a, zumindest betrachtet entlang der Querachse des photochromatischen Schutzelements 20a. Das photochromatische Schutzelement 20a überdeckt die Sensorfläche 42a vollständig, zumindest betrachtet in einer Detektionsrichtung der Sensoreinheit 18a.

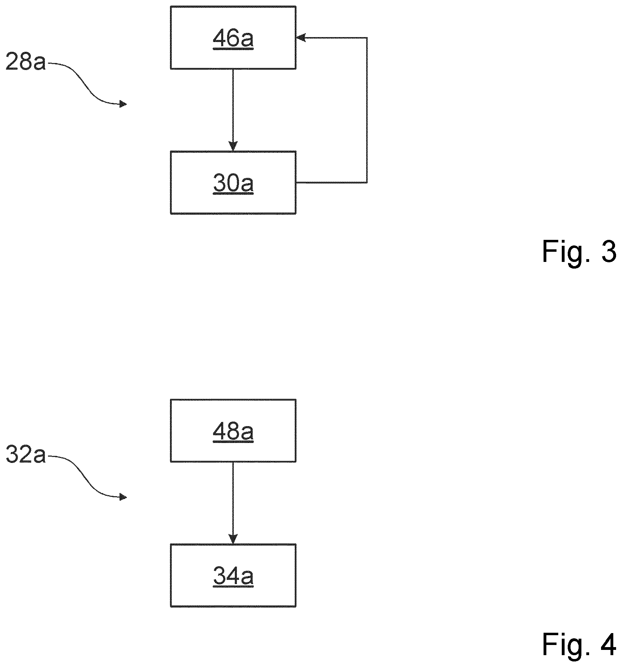

Figur 3 zeigt ein Ablaufdiagramm eines Verfahrens 28a zu einem Betrieb der Sonnenschutzvorrichtung 10a. In zumindest einem Verfahrensschritt 46a wird mittels der Sensoreinheit 18a eine Sonneneinstrahlung erfasst. In zumindest einem Verfahrensschritt 30a wird die Durchlässigkeit der Flüssigkristallzelle 16a in Abhängigkeit von der Sonneneinstrahlung eingestellt. Die Durchlässigkeit der Flüssigkristallzelle 16a wird zumindest in dem Verfahrensschritt 30a in Abhängigkeit von der Sonneneinstrahlung mittels der Steuer- und/oder Regeleinheit 44a gesteuert und/oder geregelt. Es ist denkbar, dass die Flüssigkristallzelle 16a zumindest in dem Verfahrensschritt 30a zu einer Erzeugung eines für einen Benutzer 36a definierten Durchlässigkeitsverlaufs angesteuert und/oder geregelt wird. In zumindest dem Verfahrensschritt 30a wird die Durchlässigkeit der Flüssigkristallzelle 16a zumindest in Abhängigkeit von der Durchlässigkeit des photochromatischen Schutzelements 20a eingestellt. Die Sonneneinstrahlung wird zumindest in dem Verfahrensschritt 46a nach einem Passieren des zumindest einen photochromatischen Schutzelements 20a erfasst, insbesondere mittels der Sensoreinheit 18a erfasst. Figur 4 zeigt schematisch ein Verfahren 32a zur Herstellung einer Sonnenschutzvorrichtung 10a. In zumindest einem Verfahrensschritt 48a des Verfahrens 32a liegt ein photochromatisches Schutzelement 20a getrennt von einer Flüssigkristallzelle 16a und/oder von einer Schutzschicht22a vor. In zumindest einem weiteren Verfahrensschritt 34a wird das photochromatische Schutzelement 20a auf die Schutzschicht 22a aufgebracht, insbesondere in einem Beschichtungsverfahren, oder einstückig mit der Schutzschicht 22a hergestellt. Es ist denkbar, dass die Sensoreinheit 18a zumindest in dem Verfahrensschritt 34a von dem optischen Sonnenschutzfilter 14a umspritzt wird.

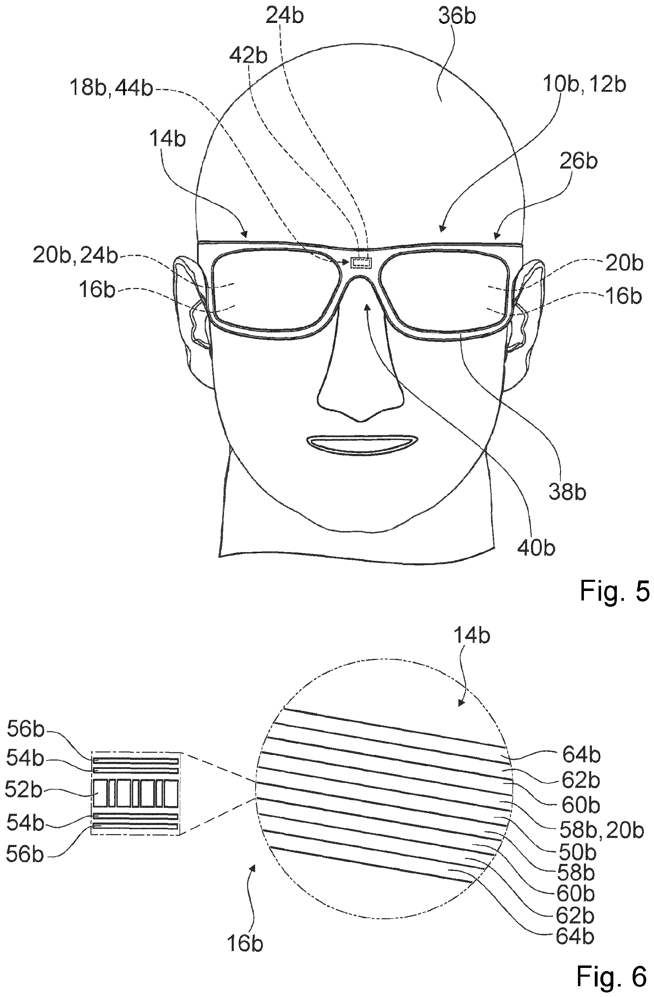

In den Figuren 5 und 6 ist ein weiteres Ausführungsbeispiel der Erfindung gezeigt. Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In dem Ausführungsbeispiel der Figuren 5 und 6 ist der Buchstabe a durch den Buchstaben b ersetzt. Insbesondere verlaufen die Verfahren zu dem weiteren Ausführungsbeispiel analog zu dem bisher beschriebenen Verfahren, wobei sich die Verfahren durch die beschriebenen Unterschiede in Bezug auf die technische Ausgestaltung der Sonnenschutzvorrichtung des weiteren Ausführungsbeispiels zu dem bisher beschriebenen Ausführungsbeispiel unterscheiden können.

Figur 5 zeigt eine Sonnenschutzvorrichtung 10b. Die Sonnenschutzvorrichtung 10b ist von einer Sonnenbrille 12b gebildet. Die Sonnenschutzvorrichtung 10b umfasst zumindest einen Brillenrahmen 26b. Die Sonnenschutzvorrichtung 10b umfasst zumindest einen optischen Sonnenschutzfilter 14b. Der optische Sonnenschutzfilter 14b weist zwei Flüssigkristallzellen 16b auf. Die Flüssigkristallzellen 16b sind gegenüber einander spiegelsymmetrisch ausgebildet. Die Flüssigkristallzellen 16b sind in dem Brillenrahmen 26b aufgenommen. Ein Grundrahmen 38b des Brillenrahmens 26b weist zwei Ausnehmungen auf, in welchen die Flüssigkristallzellen 16b aufgenommen sind. Die Flüssigkristallzellen 16b sind jeweils auf gegenüberliegenden Seiten eines Nasenausschnitts 40b angeordnet. Jede der Flüssigkristallzellen 16b ist jeweils einem Auge eines Benutzers 36b zugeordnet. Der optische Sonnenschutzfilter 14b umfasst zwei photochromatische Schutzelemente 20b. Die photochromatischen Schutzelemente 20b sind analog zu den Flüssigkristallzellen 16b angeordnet. Die Durchlässigkeit der photochromatischen Schutzelemente 20b ändert sich jeweils zumindest in Abhängigkeit von der Sonneneinstrahlung.

Die photochromatischen Schutzelemente 20b sind jeweils an einer der Flüssigkristallzellen 16b angeordnet. Jeweils eine der photochromatischen Schutzelemente 20b überschneidet sich mit jeweils einer der Flüssigkristallzellen 16b zumindest im Wesentlichen vollständig, zumindest betrachtet entlang einer Querachse der jeweiligen Flüssigkristallzelle 16b. Die Querachse der jeweiligen Flüssigkristallzelle 16b verläuft zumindest im Wesentlichen senkrecht zu einer Haupterstreckungsebene der jeweiligen Flüssigkristallzelle 16b. Die photochromatischen Schutzelemente 20b überdecken jeweils eine der Flüssigkristallzellen 16b zumindest im Wesentlichen vollständig, zumindest betrachtet in einer Richtung einer hypothetischen Sonneneinstrahlung. Die photochromatischen Schutzelemente 20b sind jeweils zumindest teilweise gekrümmt, zumindest betrachtet in einer Haupterstreckungsebene des jeweiligen photochromatischen Schutzelements 20b.

Eine Steuer- und/oder Regeleinheit 44b ist in dem Grundrahmen 38b des Brillenrahmens 26b zwischen den Ausnehmungen für die Flüssigkristallzellen 16b angeordnet. Die Sonnenschutzvorrichtung 10b umfasst zumindest eine Sensoreinheit 18b und eine Sensorabdeckung 24b. Die Sensorabdeckung 24b deckt zumindest teilweise eine Sensorfläche 42b der Sensoreinheit 18b ab. Die Sensorfläche 42b erstreckt sich zumindest im Wesentlichen parallel zu einer Stirnseite der Sonnenschutzvorrichtung 10b. Die Sensorabdeckung 24b deckt die Sensorfläche 42b zumindest im Wesentlichen vollständig ab. Die Sensoreinheit 18b ist in dem Brillenrahmen 26b angeordnet. Die Sensoreinheit 18b ist in dem Grundrahmen 38b des Brillenrahmens 26b oberhalb des Nasenausschnitts 40b angeordnet. Die Sensoreinheit 18b ist in den Brillenrahmen 26b integriert. Der Grundrahmen 38b des Brillenrahmens 26b weist oberhalb des Nasenausschnitts 40b einen Aufnahmebereich auf, der von einer Vertiefung gebildet ist. Die Sensoreinheit 18b ist in dem Aufnahmebereich des Grundrahmens 38b angeordnet. Die Sensorabdeckung 24b deckt den Aufnahmebereich des Grundrahmens 38b des Brillenrahmens 26b ab. Die Sensorabdeckung 24b ist von einer plattenförmigen Abdeckung gebildet. Die Sensorabdeckung 24b ist zumindest teilweise aus einem photochromatischen Material gebildet. Die Sensorabdeckung 24b ist aus einem Material gebildet, welches dem Material der photochromatischen Schutzelemente 20b entspricht. Die Sensorabdeckung 24b ist beabstandet zu dem photochromatischen Schutzelement 20b angeordnet. Die Sensorabdeckung 24b weist eine maximale Dicke auf, zumindest betrachtet entlang einer Querachse der Sensorabdeckung 24b, die einer maximalen Dicke der photochromatischen Schutzelemente 20b, zumindest betrachtet entlang einer jeweiligen Querachse des jeweiligen photochromatischen Schutzelements 20b, entspricht. Die Querachse der Sensorabdeckung 24b verläuft zumindest im Wesentlichen senkrecht zu einer Haupterstreckungsebene der Sensorabdeckung 24b. Die jeweiligen Querachsen der photochromatischen Schutzelemente 20b verlaufen zumindest im Wesentlichen senkrecht zu einer Haupterstreckungsebene des jeweiligen photochromatischen Schutzelements 20b. Es ist alternativ denkbar, dass die maximale Dicke der Sensorabdeckung 24b, zumindest betrachtet entlang der Querachse der Sensorabdeckung 24b, verschieden ist von der maximalen Dicke der photochromatischen Schutzelemente 20b, zumindest betrachtet entlang der jeweiligen Querachse der photochromatischen Schutzelemente 20b. Eine Durchlässigkeit der Sensorabdeckung 24b entspricht der Durchlässigkeit der photochromatischen Schutzelemente 20b. Eine Abhängigkeit der Durchlässigkeit der Sensorabdeckung 24b von der Sonneneinstrahlung entspricht der Abhängigkeit der Durchlässigkeit der photochromatischen Schutzelemente 20b von der Sonneneinstrahlung.

Der optische Sonnenschutzfilter 14b umfasst zumindest eine Polarisationsschicht 58b (vgl. Figur 6). An den Flüssigkristallzellen 16b ist jeweils zumindest eine Polarisationsschicht 58b angeordnet. Die photochromatischen Schutzelemente 20b sind jeweils in einer der Polarisationsschichten 58b eingebettet. Es ist alternativ auch denkbar, dass die photochromatischen Schutzelemente 20b jeweils auf einer der Polarisationsschichten 58b aufgebracht sind. Die Polarisationsschichten 58b sind zumindest teilweise gekrümmt ausgebildet, zumindest betrachtet in einer Haupterstreckungsebene der jeweiligen Polarisationsschicht 58b. Es ist jedoch grundsätzlich auch denkbar, dass die Polarisationsschichten 58b krümmungsfrei ausgebildet sind. Die Polarisationsschichten 58b überdecken jeweils die Flüssigkristallzellen 16b zumindest teilweise, bevorzugt vollständig, insbesondere zumindest betrachtet entlang einer Richtung eines hypothetischen Lichteinfalls, besonders bevorzugt in einer Richtung einer hypothetischen Sonneneinstrahlung.

## Patentansprüche

1. Sonnenschutzvorrichtung (10a; 10b), insbesondere Sonnenbrille (12a; 12b), mit zumindest einem optischen Sonnenschutzfilter (14a; 14b), der zumindest eine Flüssigkristallzelle (16a; 16b) aufweist, mit einer Sensoreinheit (18a; 18b), welche zumindest zu einer Erfassung einer Sonneneinstrahlung vorgesehen ist, und mit
zumindest einer Steuer- und/oder Regeleinheit (44a), welche zumindest dazu vorgesehen ist, abhängig von einer Sonneneinstrahlung eine Durchlässigkeit der Flüssigkristallzelle (16a; 16b) zu steuern und/oder zu regeln, wobei der optische Sonnenschutzfilter (14a; 14b) zumindest ein photochromatisches Schutzelement (20a; 20b) aufweist, dessen Durchlässigkeit sich insbesondere zumindest in Abhängigkeit von der Sonneneinstrahlung ändert, wobei
die Sensoreinheit (18a; 18b) dazu vorgesehen ist, eine Sonneneinstrahlung nach einem Passieren des photochromatischen Schutzelements (20a; 20b) zu erfassen, **dadurch gekennzeichnet, dass** die Sensoreinheit (18a) zumindest teilweise zwischen dem photochromatischen Schutzelement (20a) und der Flüssigkristallzelle (16a) angeordnet ist.

2. Sonnenschutzvorrichtung (10a; 10b) nach Anspruch 1, **dadurch**
**gekennzeichnet, dass** der optische Sonnenschutzfilter (14a; 14b) eine Gesamtdurchlässigkeit aufweist, welche zumindest von einer Durchlässigkeit der Flüssigkristallzelle (16a; 16b) und der Durchlässigkeit des photochromatischen Schutzelements (20a; 20b) gebildet ist.

3. Sonnenschutzvorrichtung (10a; 10b) nach Anspruch 1 oder 2, **gekennzeichnet durch** eine, insbesondere gekrümmte, Schutzschicht (22a), die als äußerste Schicht an dem optischen Sonnenschutzfilter (14a) angeordnet ist, wobei das photochromatische Schutzelement (20a) auf der Schutzschicht (22a) aufgebracht ist oder in die Schutzschicht (22a) eingebettet ist.

4. Sonnenschutzvorrichtung (10a; 10b) nach einem der vorhergehenden Ansprüche, **dadurch gekennzeichnet, dass** der optische Sonnenschutzfilter (14a; 14b) zumindest eine Polarisationsschicht (58a; 58b) aufweist, wobei das photochromatische Schutzelement (20b) auf der Polarisationsschicht (58b) aufgebracht ist oder in die Polarisationsschicht (58b) eingebettet ist.

5. Sonnenschutzvorrichtung (10a; 10b) nach einem der vorhergehenden Ansprüche, **gekennzeichnet durch** eine Sensoreinheit (18a; 18b) und eine Sensorabdeckung (24a; 24b), wobei die Sensorabdeckung (24a; 24b) eine Sensorfläche (42a; 42b) der Sensoreinheit (18a; 18b) zumindest teilweise abdeckt und zumindest teilweise aus einem photochromatischen Material gebildet ist.

6. Sonnenschutzvorrichtung (10a, 10b) nach einem der vorhergehenden Ansprüche, **gekennzeichnet durch** einen Brillenrahmen (26a; 26b), welcher zu einer Aufnahme des optischen Sonnenschutzfilters (14a; 14b) vorgesehen ist.

7. Verfahren (28a; 28b) zu einem Betrieb einer Sonnenschutzvorrichtung (10a; 10b) nach einem der vorhergehenden Ansprüche, **dadurch gekennzeichnet, dass** die Durchlässigkeit der Flüssigkristallzelle (16a; 16b) in zumindest einem Verfahrensschritt (30a; 30b) zumindest in Abhängigkeit von der Durchlässigkeit des photochromatischen Schutzelements (20a; 20b) eingestellt wird.

## Claims

1. Sun protection device (10a; 10b), in particular sunglasses (12a; 12b),
having at least one optical sun protection filter (14a; 14b) which has at least one liquid crystal cell (16a; 16b),
having a sensor unit (18a; 18b) which is configured at least for detecting solar irradiation,
and having at least one control and/or regulating unit (44a), which is configured at least for controlling and/or regulating a transmittance of the liquid crystal cell (16a; 16b) depending on solar irradiation,
wherein the optical sun protection filter (14a; 14b) has at least one photochromatic protection element (20a; 20b) whose transmittance changes in particular at least depending on the solar irradiation,
wherein the sensor unit (18a; 18b) is configured for detecting a solar irradiation after passing the photochromatic protection element (20a; 20b),
**characterized in that** the sensor unit (18a; 18b) is at least partially arranged between the photochromatic protection element (20a) and the liquid crystal cell (16a; 16b).

2. Sun protection device (10a; 10b) according to claim 1,
**characterized in that** the optical sun protection filter (14a; 14b) has a total transmittance which is formed at least by a transmittance of the liquid crystal cell (16a; 16b) and the transmittance of the photochromatic protection element (20a; 20b).

3. Sun protection device (10a; 10b) according to claim 1 or 2,
**characterized by** an, in particular, curved, protective layer (22a) which is arranged as the outermost layer on the optical sun protection filter (14a), the photochromatic protection element (20a) being applied on the protective layer (22a) or being embedded in the protective layer (22a).

4. Sun protection device (10a; 10b) according to one of the preceding claims,
**characterized in that** the optical sun protection filter (14a; 14b) has at least one polarisation layer (58a; 58b), wherein the photochromatic protection element (20b) is applied on the polarisation layer (58b) or is embedded in the polarisation layer (58b).

5. Sun protection device (10a; 10b) according to one of the preceding claims,
**characterized by** a sensor unit (18a; 18b) and a sensor cover (24a; 24b), wherein the sensor cover (24a; 24b) at least partially covers a sensor surface (42a; 42b) of the sensor unit (18a; 18b) and is at least partially formed from a photochromatic material.

6. Sun protection device (10a, 10b) according to one of the preceding claims, **characterized by** a spectacle frame (26a; 26b) configured for receiving the optical sun protection filter (14a; 14b).

7. Method (28a; 28b) of operating a sun protection device (10a; 10b) according to one of the preceding claims,
**characterized in that** the transmittance of the liquid crystal cell (16a; 16b) is adjusted in at least one method step (30a; 30b) at least in dependence on the transmittance of the photochromatic protection element (20a; 20b).

## Revendications

1. Dispositif de protection solaire (10a ; 10b), en particulier lunettes de soleil (12a ; 12b),
avec au moins un filtre de protection solaire optique (14a ; 14b) comprenant au moins une cellule à cristaux liquides (16a ; 16b),
avec une unité captrice (18a ; 18b) prévue au moins pour détecter un rayonnement solaire,
et avec
au moins une unité de commande et/ou de régulation (44a) prévue au moins pour commander et/ou réguler une transmittance de la cellule à cristaux liquides (16a ; 16b) en fonction d'un rayonnement solaire,
où le filtre de protection solaire optique (14a ; 14b) comprend au moins un élément de protection photochromatique (20a ; 20b) dont la transmittance varie en particulier au moins en fonction du rayonnement solaire,
où l'unité captrice (18a ; 18b) est prévue pour détecter un rayonnement solaire ayant traversé l'élément de protection photochromatique (20a ; 20b),
**caractérisé en ce que** l'unité captrice (18a) est disposée au moins partiellement entre l'élément de protection photochromatique (20a) et la cellule à cristaux liquides (16a).

2. Dispositif de protection solaire (10a ; 10b) selon la revendication 1,
**caractérisé en ce que** le filtre de protection solaire optique (14a ; 14b) présente une transmittance totale formée au moins par une transmittance de la cellule à cristaux liquides (16a ; 16b) et la transmittance de l'élément de protection photochromatique (20a ; 20b).

3. Dispositif de protection solaire (10a ; 10b) selon la revendication 1 ou 2,
**caractérisé par** une couche de protection (22a), en particulier courbée, qui est disposée comme couche la plus extérieure sur le filtre de protection solaire optique (14a), l'élément de protection photochromatique (20a) étant appliqué sur la couche de protection (22a) ou incorporé dans la couche de protection (22a).

4. Dispositif de protection solaire (10a ; 10b) selon l'une des revendications précédentes,
**caractérisé en ce que** le filtre de protection solaire optique (14a ; 14b) comprend au moins une couche de polarisation (58a ; 58b), l'élément de protection photochromatique (20b) étant appliqué sur la couche de polarisation (58b) ou incorporé dans la couche de polarisation (58b).

5. Dispositif de protection solaire (10a ; 10b) selon l'une des revendications précédentes,
**caractérisé par** une unité captrice (18a ; 18b) et une couverture-capteur (24a ; 24b), la couverture-capteur (24a ; 24b) recouvrant au moins partiellement une surface de capteur (42a ; 42b) de l'unité captrice (18a ; 18b) et étant réalisé au moins partiellement d'un matériau photochromatique.

6. Dispositif de protection solaire (10a ; 10b) selon l'une des revendications précédentes,
**caractérisé par** une monture de lunettes (26a ; 26b) prévue pour loger le filtre de protection solaire optique (14a ; 14b).

7. Procédé (28a ; 28b) pour faire fonctionner un dispositif de protection solaire (10a ; 10b) selon l'une des revendications précédentes,
**caractérisé en ce que** dans au moins une étape de procédé (30a ; 30b) la transmittance de la cellule à cristaux liquides (16a ; 16b) est réglée au moins en fonction de la transmittance de l'élément de protection photochromatique (20a ; 20b).
